# EUROPEAN PATENT SPECIFICATION

(11) **EP 2 441 326 B1**
(45) Date of publication and mention of the grant of the patent: **29.05.2013**
(21) Application number: 10425332.3
(22) Date of filing: 13.10.2010
(51) Int. Cl.: A01J 5/01

(54) **Flow metering device for milking plants**
Strömungsmessgerät für Melkanlagen
Dispositif de mesure de débit pour laiteries

(43) Date of publication of application: 18.04.2012
(73) Proprietor: INTERPULS S.P.A., 42020 Albinea RE (IT)
(72) Inventor: Nicolini, Gabriele, 42020 Albinea (RE) (IT); Sicuri, Roberto, 43100 Parma (IT)
(74) Representative: Robba, Pierpaolo

(56) References cited:
- EP-A1- 1 543 719
- WO-A1-2010/098124
- US-A- 5 632 411

## Description

### Technical field

The present invention relates to a flow metering device for milking plants.

### Prior art

The flow metering device (or flow meter) is an essential component in a milking plant in which the automatic detachment of the milking unit from the animal at the end of milking is provided. The automatic detachment of the milking unit is generally made possible by a system detecting milk passage. An electrical signal indicating the passage of the conveyed milk coming from the milking unit is sent to a control unit. When milk flow stops for a time exceeding a predetermined minimum threshold, the control unit stops vacuum supply to the milking unit, which, by effect of the force of gravity, detaches from the animal it is applied to. The milking unit is then automatically removed from the animal by means of a device known as automatic detachment cylinder.

In a milking plant of the above kind, the flow meter performs the fundamental function of signalling milk passage, and hence milk presence, to the control unit during milking, by exploiting the milk electrical conductivity. A flow meter according to the prior art is disclosed for instance in EP 1543719.

Another example of a flow meter according to the prior art is disclosed in WO 2010/098124 A1 on which the preamble of claim 1 is based.

The prior art flow meters generally comprise a cup-shaped body into which a milk inlet duct enters and from which a discharge duct exits. The inlet duct is associated with the milking unit from which milk comes, and the discharge duct is associated with the milk transport channel directed for instance to a collecting vessel. The discharge duct is generally equipped with a pair of spaced electrodes, which are so arranged that they are immersed in the milk when milk is present in the duct section where the electrodes are located. The electrodes are connected in an electric circuit associated with a control unit and, during milking, such a circuit is closed thanks to the electrical conductivity of the flowing milk. When milking is about to end, the milk flow becomes more and more discontinuous and consequently the signal indicating the closed state of the circuit will become intermittent. A threshold representative of the maximum opening time admitted for that circuit is set in the control unit, so that, when such a threshold is attained, the control unit commands the interruption of the vacuum circuit the flow meter is associated with and the introduction of air at atmospheric pressure, thereby causing the closure of the valve contained inside the flow meter.

The valve is generally associated by means of a stem or shutter with a control membrane contained in the flow meter. The shutter opens or closes the valve depending on the configuration taken by the control membrane. The control membrane has an outer diameter greater than that of the seat where it is located inside the cup-shaped body. In this manner the membrane takes two configurations depending on the pressure difference existing between the membrane faces.

More precisely, during milking, both faces of the membrane are subjected to the same depression. Under such a condition, the membrane takes an upward convex shape and consequently the shutter connected thereto remains lifted, thereby allowing milk discharge through the open valve. The valve remains open as long as the force exerted by the membrane geometry allows so.

At the end of milking, the introduction of atmospheric air above the membrane causes its downward flexion due to the depression still present below it, and this causes the valve closure. When the vacuum pump of the milking plant is switched off at the end of milking, the membrane returns to the open valve position.

As said above, during milking the opposite faces of the membrane are subjected to the action of the same vacuum degree, that is they are at substantially the same pressure. In such a balance condition, the valve remains open thanks to the particular membrane geometry only, which determines the membrane lifting. Yet that balance condition is precarious and a small pressure variation above or below the membrane may cause the membrane lowering, consequently making the flowing milk discharge difficult and generating the risk of the valve closure. Such a phenomenon can be started in that a depression slightly higher than that present in the chamber above the membrane is often created inside the device body; such a phenomenon is created by the unavoidable vacuum fluctuations in the vacuum pipes, in turn caused by the continuous and unavoidable variable air inflow associated with milking operations.

Moreover, when the milk flow rate is high, or in case of peaks in the amount of milk from the animal, a milk accumulation can occur near the discharge opening provided on the bottom of the cup body. Such a circumstance, combined with the phenomenon of the intermittent opening and closing of the valve due to the pressure fluctuations mentioned above, may cause a harmful milk accumulation eventually leading to an occlusion of the discharge opening. That situation results in the isolation of the milking unit associated with the flow meter from the vacuum source and causes the unwanted detachment of the milking unit from the animal. Such a phenomenon is absolutely to be avoided in the usual milking practice, since it causes harmful troubles to the concerned cow, inhibiting its natural predisposition to milk release.

Thus, it is a first object of the invention to solve the problem mentioned above of how to stabilise the open condition of the valve in the flow meter.

In order to reduce the effects deriving from the precarious balance of the valve open condition, in the prior art devices the membrane geometry is chosen such as to maintain the milk discharge valve in open condition as long as the same pressure acts on the opposite faces of the membrane. When the plant is started, however, that choice entails the need to evacuate a high amount of air to cause the valve closure by lowering the membrane, and the consequent gradual attainment of the desired vacuum degree. The need to evacuate a considerable amount of air sometimes makes the attainment of the vacuum conditions required for the plant operation impossible due to the insufficient capacity of the vacuum pump. To obviate such a drawback, plant dividing gates can be provided, which however require a time consuming manual intervention. In other cases, an overdimensioning of the vacuum pump is preferred, with a consequent increase in the buy and management costs of the plant.

Thus, it is another object of the invention to solve the problem mentioned above of how to reduce the air amount to be evacuated when the plant is to be started.

It is a further, but not the last object of the invention to provide a plant of the kind discussed above, which is easy to be constructed so that it can be industrially produced with limited costs.

### Description of the invention

The above objects are achieved by the flow metering device as claimed in the appended claims.

A first advantage of the invention results from the provision of a chamber communicating with the external environment and located below the control membrane. Such a feature allows the control membrane to remain lifted in stable manner when the chamber above the membrane is subjected to depression conditions. The stability mentioned above does not fail even in highly critical operating conditions, for instance generated by important variations in the vacuum degree, with the resulting advantage of stability in the shutter opening. Consequently, advantageously, according to this first aspect of the invention, milk discharge through the opening provided in the cup body is never penalised or reduced by an intermittent lowering of the shutter.

Advantageously, according to the invention, the control membrane is kept with a face constantly at atmospheric pressure, with the resulting advantage of a positioning stability even under the most severe operating conditions. According to the invention, the problem of how to prevent the intermittent closure of the valve is solved by keeping the lower face of the membrane constantly at atmospheric pressure, whereas the upper face of the membrane is exposed to a depression or to atmospheric pressure depending on whether the device is in milking conditions or in rest conditions, respectively. By such an arrangement, the unstable balance condition occurring in the prior art devices is avoided and the condition of maximum discharge and shutter stability is always ensured, whatever the vacuum variations in the plant may be.

A further advantage of the invention results from the ability of the device to remain naturally closed at the plant start.

Advantageously, since the membrane is arranged so as to naturally take the position in which it causes the closure of the milk outlet valve when substantially the same pressure acts on the opposite membrane faces, the device according to the invention requires a reduced pumping capacity of the vacuum pump in the milking plant when the pump is to be started. Actually, the membrane geometry allows naturally positioning the shutter against the seat associated with the discharge opening whenever the vacuum pump is stopped, whereby vacuum creation in the plant whenever the vacuum pump is started again is made much easier.

Advantageously, according to the invention, a hermetically sealed sleeve is provided, which isolates the closing stem of the valve provided inside the cup body. Such a sleeve is extensible, in order to allow the shutter it is associated with to displace over the stroke necessary for adequately opening and closing the valve provided on the bottom of the body.

Thanks to the bellows-shaped structure, the sleeve is stable under the action of the vacuum acting on the whole of its external surface, even if its internal part is constantly at atmospheric pressure.

Advantageously, moreover, the valve closure is promoted not only by the membrane shape, but also by the provision of the bellows-shaped sleeve portion in the shutter actuating assembly.

Advantageously, the sleeve shape avoids any milk whipping, foam formation is prevented and hence the milk quality and the discharge rate are improved.

Advantageously, thanks to the invention, milking is faster and more effective and requires lower energy consumption.

### Brief Description of the Figures

A preferred embodiment of the invention will be described by way of non limiting example with reference to the accompanying drawing Figures, in which:

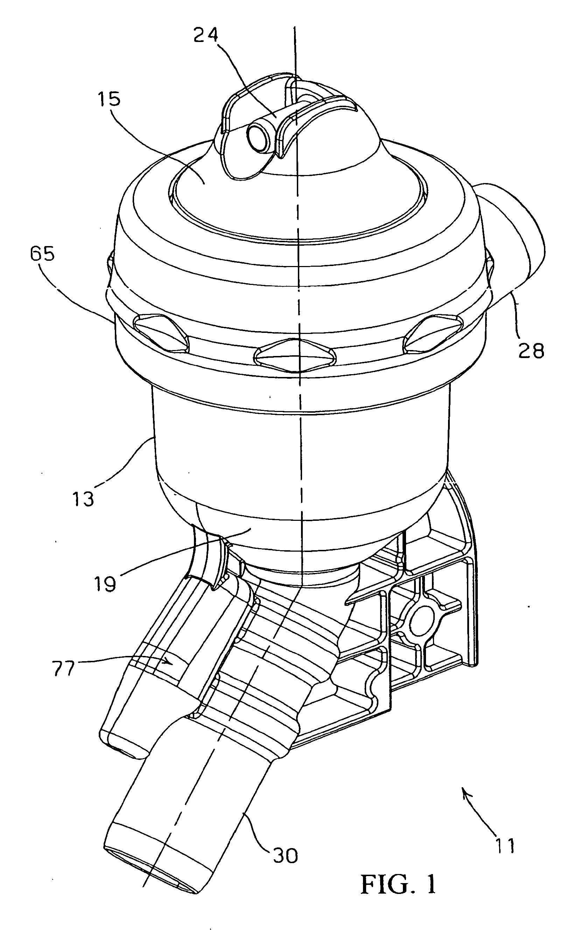

- Fig. 1 is a perspective view of the device;

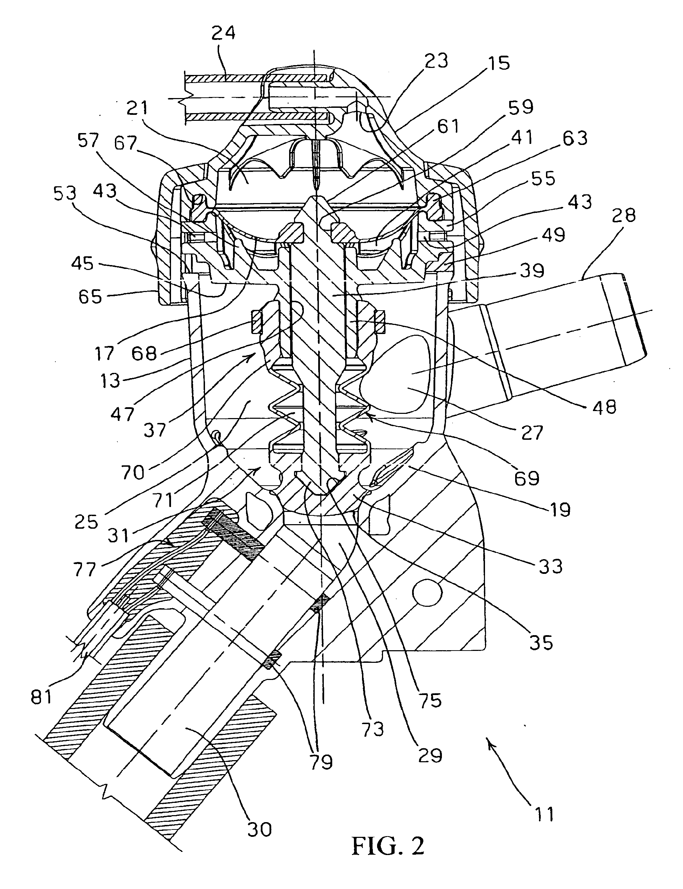

- Fig. 2 is a sectional view taken along a transverse plane of the device shown in Fig. 1.

### Description of a Preferred Embodiment

The flow metering device for milking plants according to the invention has been generally denoted in the Figures by reference numeral 11. In the Figures, moreover, device 11 is shown in the preferred orientation it has when it is associated with the milking plant, namely with the milk outlet directed downwards.

Such a device 11 comprises a cup body 13, a cover 15 and a control membrane 17 transversely arranged in the cup body between cover 15 and bottom 19 of cup body 13.

In a preferred embodiment, cup body 13 has a cylindrical shape and has a substantially circular cross section.

In the exemplary embodiment illustrated, cover 15 closes body 13 at the top.

A first hermetically sealed chamber 21, or upper chamber, is defined between cover 15 and membrane 17. Such a chamber 21 has an opening 23 that can be associated with the vacuum circuit in the milking plant through a nipple 24 coming out from cover 15.

A second hermetically sealed chamber 25, or lower chamber, is defined in cup body 13 in the space enclosed between membrane 17 and bottom 19 of the cup body. The second chamber 25 has an opening 27 for milk inlet into chamber 25 and an opening 29 for milk discharge from chamber 25. Openings 27 and 29 are associated with inlet and outlet ducts 28, 30, respectively, which can be associated with the pipes of the milking plant. According to a preferred embodiment of the invention, inlet duct 28 is tangentially directed relative to the cup body and is inclined downwards, i.e. towards discharge opening 29, in the milk flow direction relative to a transverse plane perpendicular to the longitudinal axis of cup body 13.

In an exemplary embodiment, the discharge opening is located at the centre of bottom 19 of cup body 13 and defines a passageway connected in funnel shape to the internal surface of body 13.

Device 11 further comprises a valve 31 associated with milk discharge opening 29 and equipped with a shutter 33 and a seat 35 for said shutter.

An assembly 37 for actuating shutter 33 includes a connecting member 39 associated with membrane 17 and shutter 33.

According to the invention, a third hermetically sealed chamber 41, or intermediate chamber, is defined between membrane 17 and the second chamber 25, the third chamber communicating with the external environment and being separated from the first chamber 21 by membrane 17.

Always according to the invention, the third chamber 41 preferably communicates with the external environment through at least one slot 43. In a preferred embodiment of the invention, two slots 43 are provided, preferably with rectangular cross section.

Thanks to such an arrangement, air pressure inside the third chamber 41 is the same as that outside the device, whatever the air pressure in the first chamber 21 and the second chamber 25 may be.

According to a preferred embodiment of the invention, the third chamber 41 is defined between membrane 17 and an intermediate body 45 separating the third chamber 41 from the second chamber 25. In the embodiment illustrated, intermediate body 45 defines a corresponding transversal partition inside cup body 13. Intermediate body 45 is transversally arranged inside cup body 13 and is arranged to partition the cup body into two spaces, one of which, the upper one in the drawing, houses membrane 17 whereas milk circulates in the other one, the lower one in the drawing.

According to such a preferred embodiment of the invention, membrane 17 is therefore isolated by said body 45 from the second chamber 25 where milk circulates.

Intermediate body 45 has, preferably at its centre, a cylindrical passageway 47 acting as a guide for connecting member 39. Preferably passageway 47 extends inside an appendage 48 vertically extending inside chamber 25.

Hermetic seal between intermediate body 45 and upper rim 53 of cup body 13 is obtained by means of an annular gasket 49 inserted between the intermediate body and upper rim 53 of cup body 13.

According to the invention, intermediate body 45 includes an annular portion 55 in which there is defined the at least one slot 43, putting the third chamber 41 in communication with the external environment.

The inner wall of annular portion 55 may further include, near the at least one slot 43, a pair of vertical baffles 57 whose function is to prevent possible impurities coming from the external environment from accumulating at the centre of chamber 41, where connecting member 39 is located. Actually, such impurities could hinder the vertical displacement of connecting member 39 relative to intermediate body 45, thereby negatively affecting the good operation of valve 31.

In the example illustrated, seat 35 for shutter 33 of valve 31 is centrally located in bottom 19 of cup body 13.

Control membrane 17 is suitably dimensioned and it has a seat or, like in the example illustrated, a central hole 59 where the free end 61 of connecting member 39 is fit. The geometry of peripheral edge 63 of membrane 17 is preferably asymmetrical, so as to prevent the wrong orientation of the control membrane when the device is being assembled.

In the exemplary embodiment illustrated, device 11 further includes a locking ring nut 65 intended to firmly lock cover 15 relative to cup body 13. More precisely, always with reference to the embodiment illustrated, ring nut 15 allows compressing cover 15, asymmetrical edge 63 of membrane 17 and annular portion 55 of intermediate body 45 against upper rim 53 of cup body 13 to form a pack, so as to ensure the hermetic seal and the mutual isolation of the chambers, besides imparting the necessary stability to the assembled product. Anchoring of ring nut 65 to cup body 13 takes place by means of a bayonet coupling, so that the ring nut can be opened and closed with a minimum rotation.

Edge 63 is partially received in a circumferential seat 67 formed in cover 15 located above membrane 17, and said edge 63 ensures the hermetic seal thanks to the compression exerted by closing locking ring nut 65.

According to a preferred embodiment of the invention, connecting member 39 is housed inside a hermetically sealed extensible member, preferably consisting of a sleeve 69.

Sleeve 69 is extensible and has a closed end in correspondence of which shutter 33 is defined. Said shutter 33 is preferably integrated into the body of sleeve 69. The end of sleeve 69 opposite shutter 33 defines an open cylindrical portion or hub 70 and is associated with appendage 48 of intermediate body 45, preferably by means of a sealing ring 68 surrounding said hub.

Sleeve 69 substantially consists of an extensible, hermetically sealed cylindrical body and has a bellows-shaped extensible portion 71. Connecting member 39, which in the embodiment illustrated substantially consists of a rigid cylindrical stem, is inserted into sleeve 69. Connecting member 39 is inserted with pressure, and its lower end is received in a seat 75 formed in the lower portion of sleeve 69, into which shutter 33 is integrated.

Advantageously, the arrangement described allows isolating the space inside sleeve 69 from the outside, that is from the space inside the second chamber 25 into which sleeve 69 extends. The space inside sleeve 69 therefore communicates with the third chamber 41 and is therefore constantly kept at the same pressure as that existing in chamber 41, that is the pressure outside device 11, thanks to slots 43. On the contrary, the external part of sleeve 69 can be alternately exposed to a depression, during milking, or to atmospheric pressure, when milking is not ongoing.

According to a preferred embodiment of the invention, the particular geometry of sleeve 69, the adequate extension of bellows-shaped portion 71, the integration of shutter 33 into sleeve 69 and the provision of sealing ring 68 prevent sleeve 69 from being deformed because of the pressure difference between the outside and the inside of the sleeve occurring during milking.

Advantageously, sleeve 69 is made so that the folds forming the bellows-shaped portion 71 close up onto one another to form a pack, that is until they mutually contact, when membrane 17 is lifted and shutter 33 is in valve opening condition. Thanks to such an arrangement, during milking, that is when valve 31 is open and a depression exists in chamber 25, the surfaces of the folds in the bellows-shaped portion 71 are not exposed to the depression, thereby avoiding a radial outward deformation of said bellows-shaped portion 71 and sleeve 69. Such a feature is important to avoid the radial swelling of sleeve 69 caused by the internal pressure acting on the thin thickness of the sleeve wall, typically below 1 mm. On the other hand, it is just thanks to such a thin thickness that the sleeve can be repeatedly extended and retracted over a long time without deterioration in the areas subjected to such deformations.

Advantageously, sleeve 69 is made of food-compatible rubber and has good extension and hermetic seal characteristics.

According to the invention, the geometry of membrane 17 is such that it naturally flexes towards chamber 41, that is downwards in the drawing, thereby bringing valve 31 to the closed position, when substantially the same pressure acts on the opposite faces of membrane 17. Always according to the invention, in the condition described above, closure of valve 31 is advantageously promoted also by the natural elastic extension of bellows-shaped portion 71 of sleeve 69. Such an arrangement is particularly advantageous since, when the vacuum circuit of the milking plant is to be started, the closed condition of valves 31 of the numerous flow meters provided in the plant determines a lower amount of air to be evacuated. The start of the vacuum pump of the milking plant is therefore made easier and is possible even with pumps of limited power.

In the exemplary embodiment illustrated, cover 15 defines the first chamber 21 located above membrane 17, which chamber has a size allowing the membrane to perform the desired vertical displacement. This displacement must be such that connecting member 39 associated with membrane 17 is made to translate as far as it closes up the folds of bellows-shaped portion 71 of sleeve 69 on one another to form a pack. A flexible pipe of suitable size can be inserted onto horizontal nipple 24 provided on cover 15 to introduce or remove atmospheric air into or from the first chamber 21, depending on the operating condition being applied, the other end of said pipe being connectable with an electric valve.

The components of the device may advantageously be made of food-compatible plastics. However, cover 15 and membrane 17 may also be made of a plastic material that does not need to be food-compatible, since they do not come in contact with milk.

Reference numeral 77 denotes the signalling unit in the flow meter, which unit in the exemplary embodiment, is integrated into device 11. Unit 77 includes a pair of electrodes 79, to the ends of which cables 81 connecting the electrodes to a control unit are connected. In the absence of milk, since electrodes 79 are separated from each other inside duct 30 where milk leaving cup body 13 flows, an open electric circuit is obtained, whereas, when milk is flowing, the circuit is closed thereby causing the transmission of a low-voltage electric signal to the control unit. At the end of milking, milk flow becomes more and more discontinuous and eventually reaches a threshold value, below which the control unit stops vacuum supply. When depression is no longer present in the first chamber 21, membrane 17 naturally flexes downwards, i.e., towards the third chamber 41, thanks to its geometry and causes the closure of valve 31 by means of actuating assembly 37.

## Claims

1. A flow metering device (1) for milking plants, comprising:
- a cup body (13);
- a cover (15);
- a control membrane (17) transversely arranged in the cup body between the cover and the bottom (19) of the cup body;
- a first hermetically sealed chamber (21) defined between the cover and the membrane and having an opening (23) that can be associated with the vacuum circuit of the milking plant;
- a second hermetically sealed chamber (25) defined in the space enclosed between the membrane (17) and the bottom (19) of the cup body (13) and having an opening (27) for milk inlet and an opening (29) for milk discharge;
- a valve (31) associated with the milk discharge opening (29) and equipped with a shutter (33) and a seat (35) for said shutter;
- an assembly (37) for actuating the shutter, including a connecting member (39) associated with the membrane and the shutter;
- a third hermetically sealed chamber (41) defined between the membrane (17) and the second chamber (25), which third chamber communicates with the external environment and is separated from the first chamber by the control membrane (17), so that the air pressure inside the third chamber (41) is the same as that outside the device, whatever the pressure in the first chamber (21) and the second chamber (25) may be, the device being **characterized in that** the actuating assembly (37) includes a hermetically sealed extensible member (69) housing the connecting member (39) and
**in that** the hermetically sealed extensible member (69) includes a sleeve having a bellows-shaped portion (71), and wherein the bellows-shaped portion has one end defining the shutter (33).

2. The device as claimed in claim 1, wherein the third chamber (41) is defined between the membrane (17) and an intermediate body (45) separating the third chamber (41) from the second chamber (25).

3. The device as claimed in claim 1, wherein the third chamber (41) has at least one slot (43) communicating with the external environment, whereby the pressure in the third chamber (41) is kept substantially at the same level as the pressure in the environment surrounding the device (11).

4. The device as claimed in claim 1, wherein the control membrane (17) includes a central seat (59) where the free end (61) of the connecting member (39) is fit.

5. The device as claimed in claim 1, wherein the shutter (33) is integrated into the body of the sleeve (69).

6. The device as claimed in claim 1 or 5, wherein the sleeve (69) is made so that the folds forming the bellows-shaped portion (71) close up onto one another to form a pack, that is until they mutually contact, when membrane (17) is lifted and shutter (33) is in an open condition of the valve (31).

7. The device as claimed in claim 1 or 4, wherein the connecting member (39) comprises a stem fittingly associated with the hermetically sealed extensible member (69).

8. The device as claimed in claim 2, wherein the intermediate body (45) has a cylindrical passageway (47) acting as a guide for the connecting member (39), said passageway extending inside an appendage (48) vertically extending inside the second chamber (25).

9. The device as claimed in claim 8, wherein the end of the sleeve (69) opposite the shutter (33) defines an open cylindrical portion or hub (70) associated with the appendage (48) of the intermediate body (45) by means of a sealing ring (68) surrounding said hub.

10. The device as claimed in claim 2, wherein the intermediate body (45) includes an annular portion (55) in which there is defined at least one slot (43) putting the third chamber (41) in communication with the external environment.

11. The device as claimed in claim 10, wherein the inner wall of the annular portion (55) further includes, near the at least one slot (43), a pair of vertical baffles (57) arranged to prevent possible impurities coming from the external environment from accumulating at the centre of the third chamber (41) where the connecting member (39) is located.

12. The device as claimed in any preceding claim, wherein a locking ring nut (65) is further provided, which is arranged to compress the cover (15), a peripheral edge (63) of the membrane (17) and an annular portion (55) of the intermediate body (45) as a pack against the upper rim (53) of the cup body (13), so as to ensure the hermetic seal and the mutual isolation of the three chambers (21, 25, 41), besides imparting the necessary stability to the assembled product.

13. The device as claimed in any preceding claim, wherein the geometry of the membrane (17) is such that it naturally brings the valve (31) to the closed position, when substantially the same pressure acts on the opposed faces of the membrane (17).

14. The device as claimed in any of the preceding claims, wherein connecting member (39) is inserted with pressure, and its lower end is received in a seat (75) formed in the lower portion of sleeve (69), into which shutter (33) is integrated.

15. The device as claimed in any of the preceding claims, wherein the thickness of the sleeve wall is below 1 mm.

## Patentansprüche

1. Strömungsmessgerät (1) für Melkanlagen, umfassend:
- einen Becherkörper (13);
- einen Deckel (15);
- eine Steuermembran (17), die in dem Becherkörper quer zwischen dem Deckel und dem Boden (19) des Becherkörpers angeordnet ist;
- eine erste hermetisch dichte Kammer (21), die zwischen dem Deckel und der Membran gebildet ist und eine Öffnung (23) aufweist, die dem Vakuumkreis der Melkanlage zugeordnet werden kann;
- eine zweite hermetisch dichte Kammer (25), die in dem zwischen der Membran (17) und dem Boden (19) des Becherkörpers (13) befindlichen Raum gebildet ist und eine Milcheinlassöffnung (27) sowie eine Milchauslassöffnung (29) aufweist;
- ein Ventil (31), das der Milchauslassöffnung (29) zugeordnet ist und mit einem Schieber (33) sowie mit einer Aufnahme (35) für diesen Schieber versehen ist;
- eine Stellanordnung (37) für den Schieber, welche Stellanordnung ein der Membran und dem Schieber zugeordnetes Verbindungselement (39) umfasst;
- eine dritte hermetisch dichte Kammer (41), die zwischen der Membran (17) und der zweiten Kammer (25) gebildet ist, welche dritte Kammer mit der Außenumgebung in Verbindung steht und mittels der Steuermembran (17) von der ersten Kammer getrennt ist, sodass der Luftdruck innerhalb der dritten Kammer (41) derselbe ist wie jener außerhalb des Geräts, unabhängig von dem in der ersten Kammer (21) und in der zweiten Kammer (25) herrschenden Druck,
wobei das Gerät **dadurch gekennzeichnet ist, dass** die Stellanordnung (37) ein hermetisch dichtes dehnbares Element (69) umfasst, das das Verbindungselement (39) aufnimmt, und dass das hermetisch dichte dehnbare Element (69) eine Hülse umfasst, die einen in Form eines Faltenbalgs ausgebildeten Abschnitt (71) hat, und wobei der in Form eines Faltenbalgs ausgebildete Abschnitt ein den Schieber (33) bildendes Ende hat.

2. Gerät nach Anspruch 1, wobei die dritte Kammer (41) zwischen der Membran (17) und einem die dritte Kammer (41) von der zweiten Kammer (25) trennenden Zwischenkörper (45) gebildet ist.

3. Gerät nach Anspruch 1, wobei die dritte Kammer (41) mindestens einen mit der Außenumgebung in Verbindung stehenden Schlitz (43) umfasst, wodurch der Druck in der dritten Kammer (41) im Wesentlichen auf demselben Niveau wie der Druck in der das Gerät (1) umschließende Umgebung erhalten wird.

4. Gerät nach Anspruch 1, wobei die Steuermembran (17) eine Zentralaufnahme (59) umfasst, in die das freie Ende (61) des Verbindungselements (39) eingesetzt wird.

5. Gerät nach Anspruch 1, wobei der Schieber (33) in den Körper der Hülse (69) integriert ist.

6. Gerät nach Anspruch 1 oder 5, wobei die Hülse (69) so ausgebildet ist, dass die den in Form eines Faltenbalgs ausgebildeten Abschnitt (71) bildenden Falten sich übereinander falten, sodass sie einen Pack bilden, d.h. bis sie in Kontakt miteinander kommen, wenn die Membran (17) angehoben ist und der Scheiber (33) sich in einer geöffneten Stellung des Ventils (31) befindet.

7. Gerät nach Anspruch 1 oder 4, wobei das Verbindungselement (39) einen dem hermetisch dichten dehnbaren Element (69) passend zugeordneten Schaft umfasst.

8. Gerät nach Anspruch 2, wobei der Zwischenkörper (45) einen als Führung für das Verbindungselement (39) dienenden zylinderförmigen Durchgang (47) hat, wobei dieser Durchgang sich innerhalb eines sich innerhalb der zweiten Kammer (25) vertikal erstreckenden Fortsatzes (48) erstreckt.

9. Gerät nach Anspruch 8, wobei das dem Schieber (33) gegenüberliegenden Ende der Hülse (69) eine/n offene/n zylinderförmige/n Abschnitt oder Nabe (70) bildet, der/die mittels eines diese Nabe umschließenden Dichtrings (68) dem Fortsatz (48) des Zwischenkörpers (45) zugeordnet ist.

10. Gerät nach Anspruch 2, wobei der Zwischenkörper (45) einen ringförmigen Abschnitt (55) umfasst, in dem mindestens ein Schlitz (43) gebildet ist, der die dritte Kammer (41) mit der Außenumgebung verbindet.

11. Gerät nach Anspruch 10, wobei die Innenwand des ringförmigen Abschnitts (55), in der Nähe des mindestens einen Schlitzes (43), ein Paar von Ablenkelementen (57) weiter umfasst, die dazu angeordnet sind, die Anhäufung von eventuellen aus der Außenumgebung kommenden Verunreinigungen in der Mitte der dritten Kammer (41), wo das Verbindungselement (39) angeordnet ist, zu verhindern.

12. Gerät nach einem der vorhergehenden Ansprüche, wobei eine Verriegelungsringmutter (65) weiter vorgesehen ist, die dazu angeordnet ist, den Deckel (15), einen umlaufenden Rand (63) der Membran (17) und einen ringförmigen Abschnitt (55) des Zwischenkörpers (45) als einen Pack gegen die Oberkante (53) des Becherkörpers (13) zu drücken, sodass die hermetische Dichtung und die gegenseitige Isolation der drei Kammer (21, 25, 41) gewährleistet sind sowie dem zusammengesetzten Produkt die notwendige Stabilität verliehen ist.

13. Gerät nach einem der vorhergehenden Ansprüche, wobei die Geometrie der Membran (17) so ist, dass sie auf natürliche Weise das Ventil (31) in die geschlossene Stellung bringt, wenn im Wesentlichen derselbe Druck auf die gegenüberliegenden Seiten der Membran (17) wirkt.

14. Gerät nach einem der vorhergehenden Ansprüche, wobei das Verbindungselement (39) mit Druck eingesteckt wird und sein unteres Ende in einer Aufnahme (75) aufgenommen wird, die in dem unteren Abschnitt der Hülse (69) gebildet ist, in die der Schieber (33) integriert ist.

15. Gerät nach einem der vorhergehenden Ansprüche, wobei der Dicke der Hülsenwand weniger als 1 mm ist.

## Revendications

1. Dispositif de mesure de débit (1) pour installations de traite, comprenant:
- un corps de godet (13);
- un couvercle (15);
- une membrane de contrôle (17) disposée transversalement dans le corps de godet entre le couvercle et le fond (19) du corps de godet;
- une première chambre fermée hermétiquement (21) définie entre le couvercle et la membrane et comportant une ouverture (23) qui peut être associée au circuit de vide de l'installation de traite;
- une deuxième chambre fermée hermétiquement (25) définie dans l'espace compris entre la membrane (17) et le fond (19) du corps de godet (13) et comportant une ouverture (27) pour l'entrée du lait et une ouverture (29) pour l'évacuation du lait;
- une soupape (31) associée à l'ouverture d'évacuation du lait (29) et équipée d'un obturateur (33) et d'un logement (35) pour ledit obturateur;
- un ensemble (37) pour actionner l'obturateur, comprenant un élément de liaison (39) associé à la membrane et à l'obturateur,
- une troisième chambre fermée hermétiquement (41) définie entre la membrane (17) et la deuxième chambre (25), cette troisième chambre communiquant avec l'environnement extérieur et étant séparée de la première chambre par la membrane de contrôle (17), de telle sorte que la pression de l'air à l'intérieur de la troisième chambre (41) est la même que celle à l'extérieur du dispositif, quelle que soit la pression dans la première chambre (21) et dans la deuxième chambre (25),
le dispositif étant **caractérisé en ce que** l'ensemble d'actionnement (37) comprend un élément extensible fermé hermétiquement (69) logeant l'élément de liaison(39) et **en ce que** l'élément extensible fermé hermétiquement (69) comprend un manchon ayant une partie en forme d'accordéon (71), et dans lequel la partie en forme de accordéon comprend une extrémité qui définit l'obturateur (33).

2. Dispositif selon la revendication 1, dans lequel la troisième chambre (41) est définie entre la membrane (17) et un corps intermédiaire (45) séparant la troisième chambre (41) de la deuxième chambre (25).

3. Dispositif selon la revendication 1, dans lequel la troisième chambre (41) comporte au moins une fente (43) communiquant avec l'environnement extérieur, de telle sorte que la pression dans la troisième chambre (41) est maintenue sensiblement au même niveau que la pression dans l'environnement qui entoure le dispositif (1).

4. Dispositif selon la revendication 1, dans lequel la membrane de contrôle (17) comprend un logement central (59) dans lequel l'extrémité libre (61) de l'élément de liaison (39) est insérée.

5. Dispositif selon la revendication 1, dans lequel l'obturateur (33) est intégré dans le corps du manchon (69).

6. Dispositif selon la revendication 1 ou 5, dans lequel le manchon (69) est réalisé de telle sorte que les plis formant la partie en forme de accordéon (71) se renferment les uns sur les autres à former un paquet, c'est-à-dire jusqu'à venir au contact les uns avec les autres, lorsque la membrane (17) est soulevée et l'obturateur (33) est dans une position d'ouverture de la soupape (31).

7. Dispositif selon la revendication 1 ou 4, dans lequel l'élément de liaison (39) comprend une tige qui est associée par emboîtement à l'élément extensible fermé hermétiquement (69).

8. Dispositif selon la revendication 2, dans lequel le corps intermédiaire (45) comporte un passage cylindrique (47) agissant comme une guide pour l'élément de liaison (39), ledit passage s'étendant à l'intérieur d'un appendice (48) qui s'étend verticalement à l'intérieur de la deuxième chambre (25).

9. Dispositif selon la revendication 8, dans lequel l'extrémité du manchon (69) opposée à l'obturateur (33) définit une partie cylindrique ou moyeu (70) ouvert associé à l'appendice (48) du corps intermédiaire (45) par moyennant d'une bague d'étanchéité (68) entourant ledit moyeu.

10. Dispositif selon la revendication 2, dans lequel le corps intermédiaire (45) comporte une partie annulaire (55) dans laquelle est définie au moins une fente (43) qui met la troisième chambre (41) en communication avec l'environnement extérieur.

11. Dispositif selon la revendication 10, dans lequel la paroi interne de la partie annulaire (55) comprend en outre, à proximité de l'au moins une fente (43), une paire de déflecteurs verticaux (57) agencés pour empêcher que des éventuelles impuretés provenant de l'environnement extérieur s'accumulent au centre de la troisième chambre (41) où l'élément de liaison (39) est situé.

12. Dispositif selon l'une quelconque des revendications précédentes, dans lequel une frette de verrouillage (65) est en outre prévue, cette frette de verrouillage étant agencée de façon à comprimer comme un paquet le couvercle (15), un bord périphérique (63) de la membrane (17) et une partie annulaire (55) du corps intermédiaire (45) contre le rebord supérieur (53) du corps de godet (13), de manière à assurer la fermeture hermétique et l'isolation mutuelle des trois chambres (21, 25, 41), ainsi qu'à conférer la stabilité nécessaire au produit assemblé.

13. Dispositif selon l'une quelconque des revendications précédentes, dans lequel la géométrie de la membrane (17) est telle qu'elle amène naturellement la soupape (31) vers la position fermée, lorsque sur les faces opposées de la membrane (17) agit sensiblement la même pression.

14. Dispositif selon l'une quelconque des revendications précédentes, dans lequel l'élément de liaison (39) est inséré avec pression et son extrémité inférieure est accueillie dans un logement (75) formé dans la partie inférieure du manchon (69) dans lequel l'obturateur (33) est intégré.

15. Dispositif selon l'une quelconque des revendications précédentes, dans lequel l'épaisseur de la paroi du manchon est inférieure à 1 mm.
